# EUROPÄISCHE PATENTSCHRIFT

(11) **EP 1 091 917 B1**
(45) Veröffentlichungstag und Bekanntmachung des Hinweises auf die Patenterteilung: **11.08.2004**
(21) Anmeldenummer: 99929075.2
(22) Anmeldetag: 03.05.1999
(51) Int. Cl.: C05F 11/00, C05F 11/08, C05F 17/00

(54) **VERFAHREN ZUR STICKSTOFFGESÄTTIGTEN INERTISIERUNG LIGNOCELLULOSEHALTIGER RESTSTOFFE UND FASERSTOFFE AUS NACHWACHSENDEN ROHSTOFFEN FÜR DIE VERWENDUNG ALS TORFERSATZ**
METHOD FOR NITROGEN-SATURATED IMMOBILIZATION OF WASTE MATERIALS AND FIBROUS MATERIALS BASED ON RAW MATERIALS CONTAINING LIGNOCELLULOSE FROM AFTER-GROWING RAW MATERIALS FOR UTILIZATION AS PEAT SUBSTITUTES
PROCEDE POUR RENDRE INERTES AVEC UNE SATURATION EN AZOTE DES MATIERES RESIDUELLES ET DES MATIERES FIBREUSES CONTENANT DE LA LIGNOCELLULOSE TIREES DE MATIERES BRUTES A CROISSANCE POSTERIEURE, DESTINEES A ETRE UTILISEES COMME SUCCEDANE DE LA TOURBE

(30) Priorität: 04.05.1998 DE 19819804
(43) Veröffentlichungstag der Anmeldung: 18.04.2001
(73) Patentinhaber: Bioprodukte Prof. Steinberg GmbH, 06217 Merseburg (DE)
(72) Erfinder: GRABBE, Klaus, D-38116 Braunschweig (DE); COTTA, Fritz, D-06667 Weissenfels (DE); STEINBERG, Karl-Hermann, D-06217 Merseburg (DE)
(74) Vertreter: Effert, Bressel und Kollegen
(86) Internationale Anmeldenummer: PCT/DE1999/001290
(87) Internationale Veröffentlichungsnummer: WO 1999/057080

(56) Entgegenhaltungen:
- EP-A- 0 486 466
- WO-A-95/25707
- DE-C- 19 645 609
- FR-A- 2 571 717
- US-A- 3 561 943
- US-A- 5 648 264
- DATABASE WPI Section Ch, Week 9031 Derwent Publications Ltd., London, GB; Class D16, AN 90-234308 XP002115931 & JP 02 160684 A (YUKISHITSU HIRYO SE), 20. Juni 1990 (1990-06-20)
- DATABASE WPI Section Ch, Week 8938 Derwent Publications Ltd., London, GB; Class D16, AN 89-274391 XP002115932 & JP 01 199525 A (MIYAO J), 10. August 1989 (1989-08-10)

## Beschreibung

Die Erfindung betrifft die Behandlung lignocellulosehaltiger Naturstoffe aus Aufbereitungsprozessen durch Beeinflussung des mikrobiellen Stoffumsatzes in Gegenwart von Biozönosen.

Bisher gibt es keine wirksamen Behandlungsmethoden, um originäre oder aus Aufbereitungsprozessen anfallende lignocellulosehaltige Naturstoffe so vor dem mikrobiellen Stoffumsatz zu schützen, dass sie ein Eigenschaftsprofil aufweisen, welches dem schwer zersetzbaren Torf vergleichbar ist. Dies bezieht sich auf das Voiumengewicht, die Wasserhaltekapazität, die Wiederbenetzbarkeit, den pH-Wert, den Nährstoffgehalt und das inerte Verhalten gegenüber dem Stickstoffumsatz. Letzterer ist von besonderer Bedeutung für das Verhalten von Torfersatzstoffen in Gegenwart pflanzlicher Kulturen.

Im unbehandelten Zustand können die Inhaltsstoffe technisch aufbereiteter Naturstoffe das Pflanzenwachstum beeinträchtigen, was sich am Auftreten von Nekrosen und Chlorosen, ferner an Wachstumsanomalien und -einschränkungen bei der Wurzelbildung sowie bei der Spross- und Blattentwicklung zu erkennen gibt.

Lignocellulose wird von den Mikrofloren diverser Biozönosen in den Stoffumsatz einbezogen. Sie wird mineralisiert oder mit Bruchstücken sowie Stoffwechselmetaboliten in die Huminstoffbildung involviert. Da die Lignocellulose ein sehr weites C : N - Verhältnis aufweist, entzieht die am Umsatz beteiligte mikrobielle Biomasse den benötigten Stickstoff externen Quellen, da die stickstoffhaltigen Inhaltsstoffe der Lignocellulose bei weitem nicht ausreichen. Ähnliches gilt auch für den Kernnährstoff Phosphor.

Bei Anwendung derartiger lignocellulosehaltiger Stoffe in pflanzlichen Kulturen kommt es dementsprechend zu einem Entzug aus dem zugesetzten, pflanzenverfügbaren mineralischen Nährstoffpool, was Rückwirkungen auf die pflanzliche Entwicklung hat. Es treten Wachstumsdepressionen wegen Nährstoffmangels auf.

Um lignocellulosehaltige Naturstoffe aus Aufbereitungsprozessen als Torfersatz tauglich zu machen, müssen die Wirkungen von Hemmstoffen ausgeschaltet und die N-Festlegung, auch N-Immobilisierung genannt, gemindert oder beseitigt werden. Bei geschredderter Schälrinde wurde dieses Ziel in einem bekannten Verfahren erreicht, indem sie unter Zusatz von Harnstoff einem Fermentationsprozess unterworfen wird, der zu einem N-stabilisierten Rindenhumus führt. Der Stoffumsatz stützt sich dabei wahrscheinlich auf leicht verwertbare Rindeninhaltsstoffe, z. B. Harze, Assimilate und Mineralsalze.

Leicht verwertbare niedermolekulare Inhaltsstoffe sind bei Holzfaserstoffen aus aufbereiteten Hotzhackschnitzeln zwar ebenfalls, jedoch in weitaus geringerer Menge als in Schätrinde vorhanden. Deshalb waren die Ergebnisse aller bisherigen Bemühungen, eine ähnlich nachhaltige Inertisierung der hochmolekularen Molekülverbände zu erreichen, unbefriedigend.

Bekannte Verfahren zur Herstellung von Torfersatzstoffen auf Basis von Holzfasern nutzen eine kompensative N-Zugabe beim Herstellungsprozess oder bei der späteren Verwendung, um den Stickstoffhaushalt zu kontrollieren. Eine dauerhafte chemische Einbindung des Stickstoffs in den Lignocellulosekomplex wird dadurch jedoch nicht erreicht. Dieser gravierende Mangel provoziert schwer einschätzbare Risiken bei der Verwendung von Holzfaserstoffen im Pflanzenbau, wo die sehr unterschiedlichen Nährstoffversorgungen bei der Kultivierung verschiedener Pflanzenarten beachtet werden müssen. Die Aufgabe der Erfindung besteht darin, diese Nachteile zu überwinden.

Gegenstand der vorliegenden Erfindung ist deshalb eine biochemische Einflussnahme auf den Stoffumsatz an der Lignocellulose und auf deren N-Bindungsverhalten in Gegenwart einer mikrobiellen Biozönose.

Aufbereitete hochmolekulare lignocellulosehaltige Naturstoffe enthalten geringe Mengen an Hexosen und Pentosen, sowie stickstoffhaltige aliphatische und aromatische Verbindungen. Außerdem finden sich immer auch Aromaten. In monomerer, dimerer oder polymerer Konfiguration repräsentieren sie ein Reaktionspotential, das chemisch oder biologisch aktiviert, eine Vielzahl sehr unterschiedlicher Wirkungen entfaltet. So kann das Wachstum vieler Bakterienarten wegen der Toxizität dieser Stoffe gehemmt werden. Es gibt jedoch auch Bakterienarten, die Stoffumsetzungen am Lignocellulosekomplex, z.B. die Abspaltung von Methoxylgruppen, bewerkstelligen können. Dadurch wird eine chemische Aktivierung bewirkt, die zur Reaktion des Lignocellulosekomplexes mit Phenolen und Proteinen führt.

Neben der häufig nur als marginal einzustufenden Stoffumsetzung der bakteriellen Mischflora an den hochmolekularen Strukturen der Lignocellulose wird diese in stärkerem Maße von niederen und höheren Pilzen, die über cellulolytische und lignolytische Enzymsysteme, u. a. Ligninasen, verfügen, abgebaut.

Metaboliten aus dem Abbau des Lignocelluse - Komplexes werden u.a. in die Huminstoffbildung eingebunden. Die Huminstoffbildung ist Bestandteil der Humifizierung, die als Langzeitereignis der Torfbildung aus lignocellulosehaltigen Naturstoffen zugrunde liegt. Der zwar biologisch induzierte, jedoch überwiegend enzymatisch katalysierte, ungerichtete Prozess der Huminstoffbildung erschwert einen eventuellen späteren mikrobiellen Stoffumsatz, da Huminstoffe durch Wechselwirkungen mit der originären organischen Substanz eine penetrierende Matrix aus enzymatisch schwer zugänglicher organischer Substanz bilden.
Stickstoff fördert den mikrobiellen Umsatz der niedermolekularen organischen Verbindungen in aufbereiteten hochmolekularen lignocellulosehaltigen Naturstoffen, seine Anwesenheit ist jedoch keine Voraussetzung für die Huminstoffbildung. Polymerisations- und Kondensationsreaktionen können sowohl unter N-Mangel als auch unter N-Überschuss verlaufen. Daraus resultieren entweder stickstoffarme oder stickstoffreiche Huminstoffsysteme.

Wichtige Komponenten der cellulytischen und lignolytischen Enzymsysteme sind die Oxidasen, zu denen die Peroxidasen und Phenoloxidasen in großer Vielfalt gehören. Sie kommen in pflanzlichen Geweben vor, werden aber auch von den holzabbauenden Basidiomyceten gebildet. Sie sind zellgebunden oder werden in das Substrat ausgeschieden. Sie vermögen u.a. phenolische Aromaten, aber auch Bruchstücke des dreidimensional vernetzten Lignins durch Kondensations- und Polymerisationsreaktionen in Huminstoffsysteme zu überführen. Gegenüber aromatischen Reaktionspartnem verhalten sich die Enzyme so unspezifisch, dass auch chemisch synthetisierte Aromaten (z.B. Xenobiotika) in den Stoffumsatz integriert werden. Die Wirkung der Oxidasen, die u.a. zur Radikalbildung führt, löst eine Vielzahl von biochemischen und chemischen Folgereaktionen aus, die im Sinne der Erfindung zu einer Inertisierung aufbereiteter lignocellulosehaltiger Naturstoffe führt.
Die Erfindung geht von der überraschenden Erkenntnis aus, dass die niedermolekularen Substanzen den mikrobiellen Stoffumsatz schon in frühen Rottestadien unterhalten, ohne dass die hochmolekularen Fraktionen nennenswert einbezogen werden. Der mikrobielle Stoffumsatz führt zum Temperaturanstieg auf über 50°C. Die lignocelluloseabbauende Pilzflora wird erst zu einem späteren Zeitpunkt bei Temperaturen < 50°C aktiv, so dass die natürliche Bildung und die Wirkungsentfaltung besagter Enzymsysteme dementsprechend später einsetzt. Diese zeitliche Abfolge steht bei naturbefassenem, strukturell intaktem Material im Einklang mit dem natürlichen Verlauf der Rotte.
Alle lignocellulosehaltigen Materialien dagegen, die eine wie auch immer geartete technische Aufbereitung erfahren haben und damit in dem Bereich der Erfindung fallen, vergrößern das Substratangebot an den primären mikrobiellen Stoffumsatz, was, wenn der Rahmen der vorliegenden Erfindung verlassen wird, zu den beschriebenen Problemen bei der Verwendung als Torfersatz führt.

Vor allem Holzfaserstoffe, die aus einem Aufbereitungsprozess der mechanischen Zerstörung der natürlichen Faserstruktur gewonnen wurden, bieten wegen des verbesserten Nährstoffangebotes einem gewissen, durch die Eigenschaften des Substrates selektiertem Spektrum von Mikroorganismenarten Gelegenheit zu ungestörten Stoffwechselaktivitäten. Sie können erfindungsgemäß dazu benutzt werden, mit Hilfe von zugesetztem organisch gebundenen Stickstoff der verschiedensten Herkunft eine abiotisch - chemische und/oder eine biochemisch unterlegte Inertisierung zu betreiben.

In Temperaturbereichen > 60°C werden in Gegenwart organisch gebundenen Stickstoffs abiogenen oder biogenen Ursprungs, z.B. Polyurethan, Proteine, Aminosäuren, Chitin, Karamelisierungsreaktionen initiiert, die eine Denaturierung der biogenen Konfiguration an der Lignocellulose bewirken. Diese Denaturierung erschwert den mikrobiellen Abbau karamelisierter Lignocellulose. Mit der Karamelisierung ist eine Braunverfärbung des Materials verbunden. Der Prozess kann außer durch den Zusatz von N-Verbindungen auch durch die Zugabe von Zuckern und mineralischem Stickstoff, z.B. Ammoniumsulfat oder Harnstoff intensiviert werden.

Bei Temperaturen < 60°C werden mit den biochemischen Spaltungsreaktionen an der Lignocellulose auch chemische Rückreaktionen ausgelöst, die unter den katalytischen Einfluss der Enzyme Oxidasen geraten. Hierbei kommt es zu einer Einbindung von organischen Stickstoffverbindungen, vorzugsweise Aminosäuren und Protein.

So wurde überraschend die Bildung von Ligno-Protein-Komplexen mit N-Gehalten im Lignin bis zu 4 % in der Trockensubstanz gefunden. Hierbei bleiben die überwiegend enzymatisch gerichteten Strukturen des originären Lignins erhalten und sind dem Stoffumsatz durch Pilzfloren zugänglich.

Die Wirkung des Stickstoffeinbaus, der durch die Anwendung des erfindungsgemäßen Verfahrens erreicht wird, überraschte. Die bei nicht erfindungsgemäß hergestellten lignocellulosehaltigen Torfersatzstoffen übliche N-Immobilisierung in der Größenordnung von 500 mg N/l konnte bei Anwendung des erfindungsgemäßen Verfahrens auf Größenordnungen < 100 mg N/l reduziert werden. Damit ist eine hocherwünschte Qualitätsverbesserung für die Verwendung aufbereiteter lignocellulosehaltiger Naturstoffe erreichbar.

Der bei Anwendung des erfindungsgemäßen Verfahrens stattfindende stimulierte Stickstoffeinbau in die Lignocellulose wird durch die Behandlung mit Enzymlösungen, die Oxidasen enthalten, bei Temperaturen < 60°C so weit gefördert, dass die bei Anwendung nichterfindungsgemäßer Verfahren häufig beobachtete Neigung der Schimmelbildung überraschend unterdrückt werden konnte. Auch traten keine Chlorosen und Nekrosen in Pflanzenanbauversuchen mit dem erfindungsgemäß hergestellten Torfersatzstoff auf.

Der Stickstoffeinbau in die Lignocellulose ist an das Vorhandensein einer geeigneten Biozönose geknüpft. Als besonders günstig erweist sich der Zusatz von ausgereiftem, biologisch stabilem Rindenhumus, zum aufbereiteten lignocellulosehaltigem Naturstoff.

Der erfindungsgemäß in Gegenwart von stickstoffhaltigen Verbindungen, vorzugsweise Proteinen, ausgeführte Prozess führt zu einer torfähnlichen, tiefbraunen Verfärbung des aufbereiteten lignocellulosehaltigen Naturstoffs.

Die stabile chemische Bindung des Stickstoffs an die Lignocellulose, d.h. im Ligno-Protein-Komplex, gewährleistet, dass sich ein späterer mikrobieller Stoffumsatz auf ein ausgewogenes Kohlenstoff- und Stickstoffangebot stützen kann. Der Abbau der Torfersatzstoffe in Pflanzenkultursubstraten verläuft wie der von Torf deutlich langsamer als im Fall der originären organischen Substanz.

Die Tätigkeit der Enzyme Oxidasen ist an die Anwesenheit von Sauerstoff gebunden. Die Zufuhr des Sauerstoffs kann auf an sich bekannte Weise durch Einspeisung von Frischluft mit und ohne Zusatz von reinem Sauerstoff erfolgen.

Die mikrobielle Tätigkeit ist an eine ausreichende Feuchtigkeit gebunden. Der optimale Wassergehalt liegt im Bereich 50 bis 60 %.

Die Stickstoffbindung an die Lignocellulose kann durch allgegenwärtige oder bei Mangel durch gezielt hinzugefügte Cofaktoren der Enzymsysteme wie Mangan- und Kupfersalze, aber auch Eisen- und Manganoxide, zum Zwecke der abiotischen Phenolbindung unterstützt werden.

Beispiele für die Konditionierung:
1.
   1 m³ Holzfaserstoffe;
   5 Vol.% Rindenhumus;
   40.000 Einheiten eines phenolasehaltigen Enzymisolats;
   10 kg Weizenkleie oder vergleichbare leicht verwertbare
   Kohlenstoffquellen;
   0,50 kg Mineral - N;
   0, 15 kg Mineral - P.
2.
   1 m³ Holzfaserstoffe;
   5 Vol.% Rindenhumus;
   40.000 Einheiten eines phenolasehaltigen Enzymisolats;
   5 Gew.% FM proteinhaltiges Kieselgur;
   5 kg Weizenkleie oder vergleichbare leicht verwertbare
   Kohlenstoffquellen;
   0.30 kg Mineral - N;
   0.15 kg Mineral - P.

## Patentansprüche

1. Verfahren zur stickstoffgesättigten Inertisierung technisch aufbereiteter lignocellulosehaftiger Naturstoffe für die Verwendung als Torfersatz, **dadurch gekennzeichnet, dass** diese in Gegenwart natürlicher mikrobieller Biozönosen und nach Zusatz von organischen und/oder anorganischen stickstoffhaltigen Verbindungen und/oder Kohlenstoffquellen sowie Zusatz von phenolasehaltigen Enzymisolaten im feuchten Zustand und in Gegenwart von Sauerstoff zunächst bei Temperaturen > 60°C und anschließend bei Temperaturen < 60°C wärmebehandelt werden.

2. Verfahren nach Anspruch 1, **dadurch gekennzeichnet, dass** als organische stickstoffhaltige Verbindungen wie Weizenkleie und/oder proteinhaltige Kohlenstoffquellen verwendet werden.

3. Verfahren nach Anspruch 1 und 2, **dadurch gekennzeichnet, dass** ein Feuchtegehalt in der Gesamtmischung von 50 bis 60 Masse - %, eingestellt wird.

4. Verfahren nach den Ansprüchen 1 bis 3, **dadurch gekennzeichnet, dass** die erste Wärmebehandlung bei vorzugsweise 65 bis 70°C und die zweite Wärmebehandlung bei vorzugsweise 40 bis 50°C durchgeführt wird.

5. Verfahren nach Anspruch 1 und 2 **dadurch gekennzeichnet, dass** die Gesamtmenge des zugefügten Stickstoffs so bemessen ist, dass eine N-Immobilisierung im fertigen Produkt < 100 mg/l erreicht wird.

6. Verfahren nach den Ansprüchen 1 bis 5, **gekennzeichnet dadurch, dass** Luft als Sauerstoffquelle während der stickstoffgesättigten Inertisierung verwendet wird.

## Claims

1. Method for the nitrogen-saturated immobilisation of industrially prepared natural substances containing lignocellulose to be used as peat substitutes, **characterised in that** these substances are heat-treated in the presence of natural microbial biocenoses and after the addition of organic and/or inorganic nitrogenous compounds and/or sources of carbon, as well as the addition of phenolase-containing enzyme isolates in the damp state and in the presence of oxygen, initially at temperatures > 60°C and subsequently at temperatures < 60°C.

2. Method according to claim 1, **characterised in that** compounds such as wheat bran and/or proteinaceous sources of carbon are used as the organic nitrogenous compounds.

3. Method according to claim 1 and 2, **characterised in that** a moisture content in the total mixture of 50 to 60 % by weight is set.

4. Method according to claims 1 to 3, **characterised in that** the first heat treatment is carried out preferably at 65 to 70°C and the second heat treatment preferably at 40 to 50°C.

5. Method according to claims 1 and 2, **characterised in that** the total amount of the added nitrogen is measured to be such that an N-immobilisation in the finished product < 100 mg/l is achieved.

6. Method according to claims 1 to 5, **characterised in that** air is used as the source of oxygen during the nitrogen-saturated immobilisation.

## Revendications

1. Procédé pour rendre inertes avec une saturation en azote des matières naturelles contenant de la lignocellulose préparées techniquement pour leur utilisation comme tourbe de substitution, **caractérisé en ce que** celles-ci sont traitées par la chaleur en présence de biocénoses microbiennes naturelles et après ajout de composés organiques et/ou inorganiques contenant de l'azote et/ou de sources de carbone ainsi qu'après ajout d'isolats d'enzyme contenant de la phénolase à l'état humide et en présence d'oxygène d'abord à des températures supérieures à 60°C et enfin à des températures inférieures à 60°C.

2. Procédé selon la revendication 1, **caractérisé en ce qu'**on utilise comme composés organiques contenant de l'azote le son de blé et/ou des sources de carbone contenant des protéines.

3. Procédé selon les revendications 1 et 2, **caractérisé en ce qu'**une teneur en humidité du mélange total est établie à 50 à 60 % en masse.

4. Procédé selon les revendications 1 à 3, **caractérisé en ce que** le premier traitement par la chaleur est réalisé de préférence entre 65 et 70°C et le second traitement par la chaleur est réalisé de préférence entre 40 et 50°C.

5. Procédé selon les revendications 1 et 2, **caractérisé en ce que** la quantité totale de l'azote introduit est mesurée de manière à atteindre une immobilisation N dans le produit fini inférieure à 100 mg/l.

6. Procédé selon les revendications 1 à 5, **caractérisé en ce que** de l'air est utilisé comme source d'oxygène pendant le procédé pour rendre inerte avec une saturation en azote.
